**Europäisches Patentamt**

**European Patent Office**

**Office européen des brevets**

(19)

(11) Veröffentlichungsnummer: **0 385 235**

**A1**

(12) **EUROPÄISCHE PATENTANMELDUNG**

(21) Anmeldenummer: **90103230.0**

(22) Anmeldetag: **20.02.90**

(51) Int. Cl.⁵: **G05D 23/24, B05C 17/005**

(30) Priorität: **01.03.89 DE 3906480**

(43) Veröffentlichungstag der Anmeldung:
**05.09.90 Patentblatt 90/36**

(84) Benannte Vertragsstaaten:
**GR**

(71) Anmelder: **Henkel Kommanditgesellschaft auf Aktien**
**Postfach 1100 Henkelstrasse 67**
**D-4000 Düsseldorf 1(DE)**

(72) Erfinder: **Steinel, Heinrich Wolfgang**
**Röntgenweg 8**
**D-8939 Bad Wörishofen(DE)**
Erfinder: **Schulze-Fröhlich, Dieter Fritz, Dr.**
**Niggenkamp 17**
**D-4836 Herzebrock 1(DE)**

(54) Heizkörper für Elektrowärmegeräte, insbesondere für eine Heisskleber-Pistole, mit wenigstens einem temperaturabhängigen Widerstand.

(57) Der Heizkörper 11 für Elektrowärmegeräte, insbesondere für Heißkleber-Pistolen, weist wenigstens einen Heizwiderstand 24 für die Dauerbeheizung und wenigstens einen weiteren Heizwiderstand 33 auf, der bei Bedarf zuschaltbar ist, die Heizwiderstände 24 und 33 sind beiderseits eines Führungskanals 14 in Ausnehmungen 22 und 33 untergebracht; der Heizwiderstand 24 für die Dauerbeheizung ist gleichzeitig Fühler seiner eigenen Temperatur, dessen Signal zur Steuerung einer Regelschaltung 31 verwendet wird; der Heizwiderstand 33 für die zusätzliche Beheizung weist eine um wenigstens 80 °C höhere Arbeitstemperatur auf als der Heizwiderstand 24 für die Dauerbeheizung; vorzugsweise sind für beide Heizwiderstände keramische Kaltleiter (PTC-Widerstände) eingesetzt mit Curie-Temperaturen von 230 bzw. 320 °C.

FIG.1

## Heizkörper für Elektrowärmegeräte, insbesondere für eine Heißkleber-Pistole, mit wenigstens einem temperaturabhängigen Widerstand.

Die Erfindung betrifft einen Heizkörper für Elektrowärmegeräte, insbesondere für eine Heißkleber-Pistole, der wenigstens einen temperaturabhängigen Widerstand, insbesondere einen Kaltleiter (PTC-Widerstand), für die Dauerbeheizung und wenigstens einen weiteren Heizwiderstand enthält, die in dem Heizkörper, der aus gut wärmeleitendem Metall, insbesondere aus Aluminium besteht, untergebracht sind und der mit Heizflächen für die Wärmeübergabe versehen ist.

Kaltleiter (PTC-Widerstände) sind elektrische Widerstände mit einem Keramikkörper aus durch Dotierung leitfähigem Material mit Perowskitstruktur und haben im Bereich der Curie-Temperatur einen steilen, praktisch sprunghaften Anstieg des Widerstandswertes mit steigender Temperatur, der bis zu fünf Zehnerpotenzen betragen kann. Herstellung und Anwendung solcher Kaltleiter sind hinreichend bekannt.

Ein derartiger Heizkörper ist im Zusammenhang mit einer Heißkleber-Pistole beispielsweise in der DE-PS 30 39 343 in allen Einzelheiten und bezüglich seiner Arbeitsweise beschrieben. Für die Dauerbeheizung dient entweder ein Kaltleiter oder auch ein Masse-bzw. Festwiderstand, der in aller Regel als Drahtwiderstand ausgeführt ist.

Anstelle nur eines Kaltleiters können auch mehrere Kaltleiter vorhanden sein, die gleiche Curie-Temperatur aufweisen, entweder parallel oder in Reihe geschaltet sind und eine größere Wärmeabgabe gewährleisten.

Es ist auch hinreichend bekannt, für die Beheizung eines Heizkörpers mehrere Kaltleiter zu verwenden, die unterschiedliche Curie-Temperaturen haben, jedoch besteht dabei die sehr erhebliche Gefahr, daß ein Kaltleiter mit höherer Curie-Temperatur den anderen Kaltleiter, der eine niedrigere Curie-Temperatur besitzt, über diese und über die Temperatur des maximalen Widerstandes hinaus erhitzt. In diesem Fall wird der überhitzte Kaltleiter wieder zum Teil sogar sehr gut leitend, so daß die notwendige Strombegrenzung aufgehoben ist und der Heizkörper gefährlich überhitzt wird, was bis zum Kurzschluß oder sogar bis zur Zerstörung des Kaltleiters führen kann. Bei dieser Art der Verwendung mehrerer Kaltleiter mußten diese bisher besonders ausgewählt werden, wofür die jeweiligen Curie-Temperaturen und die Temperaturen des maximalen Widerstandsanstieges als Kriterien dienten. Auf diese Weise ist es keinesfalls möglich, den weiteren Heizwiderstand nur im Bedarfsfall, beispielsweise für ein schnelleres Aufheizen, einzusetzen.

Der vorliegenden Erfindung liegt die Aufgabe zugrunde, einen Heizkörper anzugeben, der es ermöglicht, unter Anwendung einer Regelschaltung den oder die weiteren Heizwiderstände so zu steuern, daß immer dann, wenn erhöhter Wärmebedarf vorliegt, dieser wenigstens eine weitere Heizwiderstand eingeschaltet wird und dann, wenn die Heizleistung des wenigstens einen temperaturabhängigen Widerstand, insbesondere des Kaltleiters, ausreicht und/cder dieser vor einer Überhitzung der Curie-Temperatur steht, der wenigstens eine weitere Heizwiderstand abgeschaltet wird.

Zur Lösung dieser Aufgabe ist der Heizkörper der eingangs genannten Art erfindungsgemäß dadurch gekennzeichnet, daß der wenigstens eine weitere Heizwiderstand eine höhere Arbeitstemperatur aufweist als der wenigstens eine temperaturabhängige Widerstand, insbesondere der Kaltleiter, daß der wenigstens eine temperaturabhängige Widerstand, insbesondere der Kaltleiter, neben seiner Funktion der Dauerbeheizung des Heizkörpers auch als Fühler seiner eigenen Temperatur dient, dessen Signale zur Steuerung einer Regelschaltung verwendet werden, daß der wenigstens eine weitere Heizwiderstand zur Beheizung des Heizkörpers nur während der Aufheizperiode oder im Falle eines erhöhten Wärmebedarfs während der Betätigung der Heißkleber-Pistole dient. indem dieser weitere Widerstand über ein Stellglied der Regelschaltung zu- oder abgeschaltet wird.

Eine vorteilhafte Ausführungsform besteht darin, daß der wenigstens eine temperaturabhängige Widerstand ein Widerstandsdraht mit positivem Temperaturkoeffizienten des Widerstandswertes ist, der in einer Heizpatrone untergebracht ist.

Es ist vorteilhaft, wenn der wenigstens eine Kaltleiter eine Curie-Temperatur von 230 °C besitzt und der wenigstens eine weitere Heizwiderstand ein Festwiderstand ist, dessen Arbeitstemperatur etwa 350 °C beträgt.

Ferner ist es besonders vorteilhaft, wenn sowohl der wenigstens eine Kaltleiter, als auch der eine weitere Heizwiderstand Kaltleiter sind, deren curie-Temperaturen voneinander wenigstens um 80 °C abweichen.

Dabei weist vorzugsweise der wenigstens eine Kaltleiter eine Curie-Temperatur von 230 °C und der wenigstens eine weitere Heizwiderstand weist eine Curie-Temperatur von etwa 330 °C auf.

Bei einem Heizkörper, der als Heizfläche für die Wärmeübergabe einen beiderseits offenen, in Längsrichtung des Heizkörpers durchgehenden, anfangs gegebenenfalls zylindrischen und zum anderen Ende konisch sich verjüngenden Führungskanal aufweist, zu dessen einer Seite und parallel zum ihm sich der wenigstens eine Kaltleiter befindet und in einer Ausnehmung des Heizkörpers untergebracht ist, wobei der Heizkörper im Vertikalschnitt eine Breite aufweist, die nur geringfügig größer ist als der Durchmesser des zylindrischen Teiles des Führungskanals bzw. der Ausnehmung, wird gemäß einer bevorzugten Weiterbildung der Erfindung vorgeschlagen, daß der wenigstens eine weitere Heizwiderstand ebenfalls in einer Ausnehmung untergebracht ist, die sich spiegelbildlich zur ersten Ausnehmung auf der andren Seite des Führungskanals befindet.

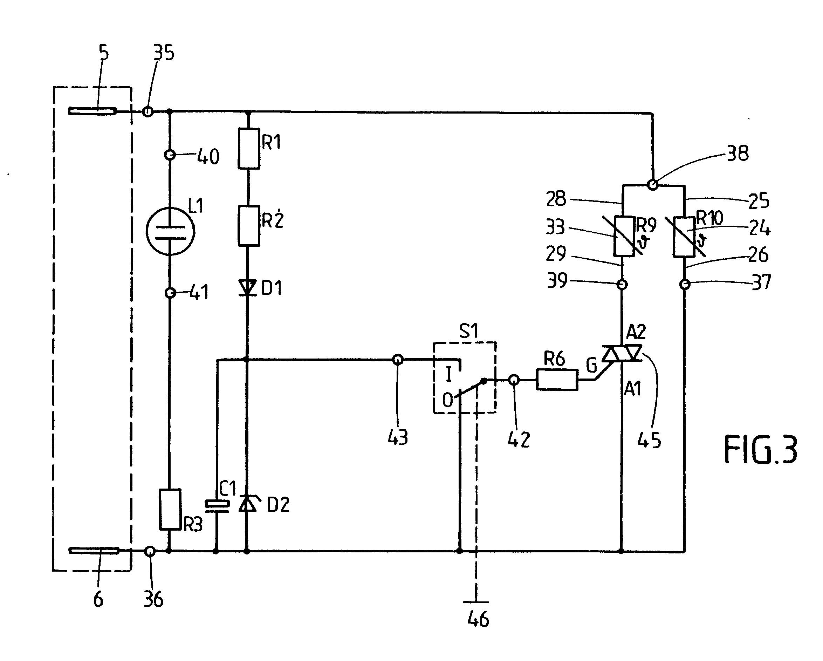

Die in den Unteransprüchen 7, 8, 9 und 10 beanspruchten Ausführungsformen und ihre Vorteile werden anhand der Figuren 3, 4 und 5 dargestellt. An dieser Stelle wird darauf hingewiesen, daß es auch möglich ist und im Rahmen der Erfindung liegt, die in den Figuren 3 bis 5 dargestellten Schaltungsanordnungen miteinander zu kombinieren.

Durch die Erfindung werden unter anderem folgende Vorteile erzielt:

Die Aufheizzeit wird erheblich verkürzt. So wird beispielsweise bei einer Heißkleber-Pistole mit Kaltleitern sowohl für die Dauerbeheizung als auch für die zusätzliche Beheizung mit Curie-Temperaturen von 230 und 320 °C die Aufheizzeit von bisher etwa sieben Minuten auf zwei bis drei Minuten verkürzt.

Der Durchschub von Kunststoffmaterial durch diese Heißkleber-Pistole wird erheblich vergleichmäßigt. Bei den bisher bekannten Heißkleber-Pistolen wird nämlich der Durchschub behindert, wenn versucht wird, das Kunststoffmaterial zu schnell zu verarbeiten, weil in diesem Fall dem Heizkörper mehr Wärme entzogen wird, als der Kaltleiter liefern kann. Die Folge ist, daß das Kunststoffmaterial nicht warm genug wird und es zum Stau kommt.

In einem solchen Fall wird durch die Erfindung erreicht, daß über den weiteren Heizwiderstand, der sich wegen seiner höheren Arbeitstemperatur schneller und auch auf eine höhere Temperatur aufheizt und damit an den Heizkörper eine größere Wärmemenge abgeben kann, die Wärmeabnahme kompensiert wird, und zwar bis zu der durch den ersten Kaltleiter bestimmten Temperatur, weil er dann wegen seiner gleichzeitigen Selbstfühlerfunktion das Abschalten des weiteren Heizwiderstandes über die Regelschaltung veranlaßt.

Die Erfindung ermöglicht es ferner als besonderen Vorteil, daß zusätzliche elektrische und/oder Wärmeisolation überflüssig ist, die erforderlich wäre, wenn man einen zusätzlichen Temperaturfühler für die Überwachung des ersten Kaltleiters bzw. des gesamten Heizkörpers einsetzen würde. Der gleichzeitig als Fühler wirkende Kaltleiter hat nämlich die gleichen Isolationswerte und Abstände, wie sie bei Doppelisolierungen zulassungsmäßig gefordert werden. Fühler und Heizer haben keine thermische Trennung und somit gleiches (identisches) Temperaturverhalten ohne verfälschende Temperatursprünge durch Zusatzisolierungen, wodurch die Reaktionszeit, d. h. das Regelverhalten dieser Heizungs-Fühlerkombination, deutlich günstiger als die eines Heizkaltleiters mit einem zusätzlichen Fühler ist.

Durch die Erfindung wird auch erreicht, daß die bisher gelegentlich für diese Zwecke, nämlich für die schnellere Reaktion auf Lastwechsel mit der Folge des Abkühlens, eingesetzten mechanischen Regler in Form von Potentiometern oder als Bimetallschalter, die beide nur von beschränkter Lebensdauer sind, nicht mehr erforderlich sind, wobei der angestrebte Effekt zudem noch besser und mit einfacheren Mitteln verwirklicht wird.

Es resultiert somit ein Heizkörper, der bei der bevorzugten Anwendung in einer Heißkleber-Pistole eine schnelles Aufheizen des Führungskanals bis zur optimalen Verarbeitungstemperatur und ein schnelles Nachführen elektrischer Energie bei hoher Durchschubgeschwindigkeit gewährleistet.

Der Heizkörper der Erfindung kann bei entsprechender Formgestaltung für Elektrowärmegeräte verschiedenster Art verwendet werden. Eine bevorzugte Anwendung ist der Einsatz in einer Heißkleber-Pistole, die nachfolgend beschrieben wird.

Die Erfindung wird anhand der Figuren näher erläutert. Im einzelnen zeigen:

Figur 1 den Schnitt eines pistolenförmigen Handgerätes als bevorzugtes Ausführungsbeispiel, anhand dessen die Erfindung deshalb dargestellt wird;

Figur 2 einen Vertikalschnitt gemäß I - I in Fig. 1;

Figur 3 eine Schaltungsanordnung für die Regelschaltung mit einem Schalter;

Figur 4 eine Schaltungsanordnung für die Regelschaltung mit einer Berührungselektrode und

Figur 5 eine Schaltungsanordnung für die Regelschaltung mit vollständig selbsttätigem Zu- und Abschalten.

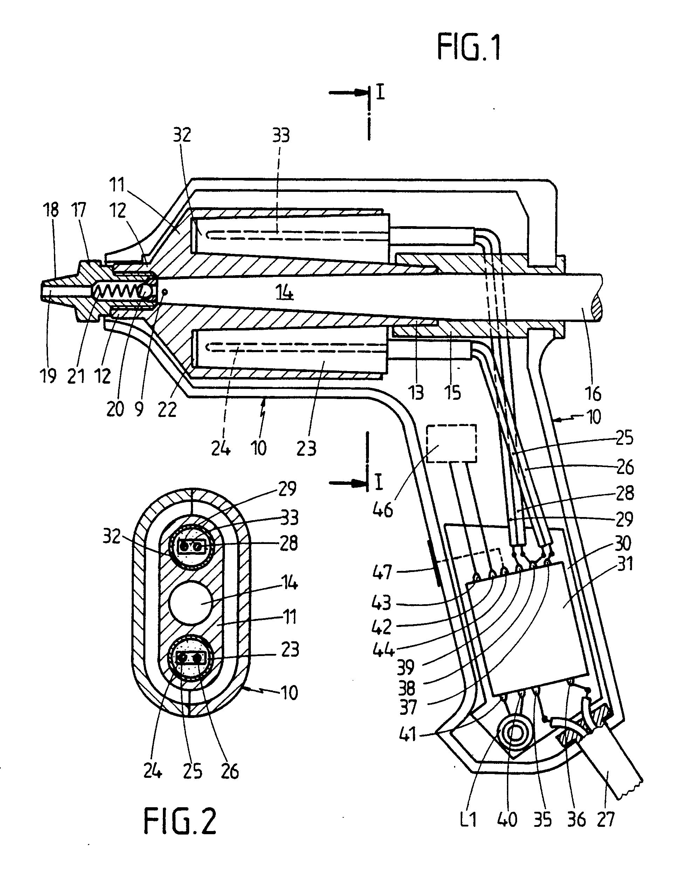

In Figur 1 ist ein pistolenförmiges Handgerät dargestellt, für das hier die Bezeichnung Heißkleber-Pistole gewählt wurde, weil das der Klebung dienende, meist thermoplastische Kunststoffmaterial in dem Gerät über seinen Erweichungspunkt erhitzt wird.

Das Gerät enthält ein temperaturfestes Kunststoffgehäuse 10, in dem sich der Heizkörper 11 befindet. Der Heizkörper 11 ist beispielsweise ein Aluminium-Druckgußteil und ist in der Zeichnung links mit einem zylindrischen Flansch 12, sowie rechts mit einem konischen Flansch 13 versehen. Mit Hilfe dieser Flansche ist hier der Heizkörper 11 im Kunststoffgehäuse 10 befestigt, wofür über den rechten Flansch 13 eine Einstecktülle 15 gezogen ist, die im Gehäuse 10 verankert ist.

Der Heizkörper 11 enthält in seinem Inneren als Heizfläche für die Wärmeübergabe einen beiderseits offenen Führungskanal 14, der von rechts nach links sich konisch verjüngend verläuft. Gegebenenfalls kann in der Nähe der rechten Öffnung der Führungkanal 14 anfangs für ein kurzes Stück zylindrisch verlaufen. Die über den Flansch 13 gezogene Einstecktülle 15, die zur Außenseite des Kunststoffgehäuses 10 geführt ist, ermöglicht das leichte und stoßfreie Einschieben der Kleberstäbchen 16 (auch Stick genannt) und gewährleistet außerdem, daß kein unerwünschter Wärmeverlust durch Ableitung von Wärme vom rechten Ende des Heizkörpers 11 nach außen auftritt. Das Kunststoffmaterial des Klebers kann in Form von Sticks von Hand oder mittels eines Vorschubhebels - wie ebenfalls bekannt - von Hand oder auch durch Motorantrieb durch den Führungskanal gedrückt werden. Liegt das Kunststoffmaterial in Form eines gröberen Pulvers oder als Granulat vor, dann kann es auch z. B. mittels Preßluft aus einem Vorratsbehälter über eine Schlauch-oder Rohrleitung dem Führungskanal zugeleitet werden.

Der Führungskanal 14 mündet am linken Ende des Heizkörpers 11 in einen Ventileinsatz 17, der mit einem Mundstück 18 versehen ist, welches die eigentliche Austrittsöffnung 19 für den verflüssigten Kleber aufweist. Der Ventileinsatz 17 enthält ein Einwegventil in Form eines Kugelventils 20, dessen Ventilfeder 21 die Öffnung des Ventils bei Einwirkung eines vorbestimmten Druckes vom Führungskanal 14 her ermöglicht.

Der Ventileinsatz kann ebenfalls ein Aluminium-Druckgußteil sein oder auch aus einem anderen Material, beispielsweise aus Messing, bestehen.

Unterhalb des Führungskanals 14 befindet sich eine einseitig offene Ausnehmung 22 im Heizkörper 11, die von rechts nach links konisch sich verjüngend ausgebildet sein kann und deren Achse parallel zur Achse des Führungskanals 14 verläuft. Die Ausnehmung 22 erstreckt sich über den größten Teil der Länge des Führungskanals 14, beim dargestellten Beispiel über mehr als 3/5 der Länge des Führungskanals 14. In der Ausnehmung 22 ist eine Kaltleiter-Heizpatrone 23. Sie kann in die Ausnehmung 22 eingepreßt oder aber auch in ihr beispielsweise verklebt oder verschraubt sein. Die Heizpatrone 23 enthält einen oder mehrere Kaltleiter 24, die im dargestellten Beispiel plättchenförmig sind und über zwei Anschlußleitungen 25 und 26 mit Strom versorgt werden. Der Raum ist mit Wärmeleitmaterial gefüllt.

Am Meßpunkt 9 im Heizkörper 11 wurde ermittelt, daß bereits nach vier Minuten - gegenüber bisher zehn Minuten - der Heizkörper an dieser Stelle eine Temperatur von 175 °C annimmt.

Figur 2 zeigt einen Schnitt längs der Linie I - I in Fig. 1 und läßt erkennen, daß das Gehäuse aus zwei Hälften zusammengesetzt ist und daß der Heizkörper 11 (vgl. auch Fig. 1) oberhalb des Führungskanals 14 eine weitere Ausnehmung 32 enthält, deren Gestaltung der Ausnehmung 22 entspricht. Die Ausnehmung 32 enthält den oder die weiteren Heizwiderstände 33, im dargestellten Beispiel sind es ebenfalls Kaltleiter, die jedoch eine um wenigstens 80 °C höhere Curie-Temperatur haben. Diese Kaltleiter 33 sind ebenfalls, wie oben für die Kaltleiter 24 beschrieben, in einer Heizpatrone 34 untergebracht und in der Ausnehmung 32 befestigt. Sie werden über die Anschlußleitungen 28 und 29 mit Strom versorgt.

Das pistolenförmige Handgerät enthält in seinem Griff das Ende des Stromzuführungskabels 27 und eine auf ihrer Rückseite mit gedruckten Leitungen versehene Schaltungsplatine 30, die auf ihrer Vorderseite die Regelschaltung 31 trägt. Diese Regelschaltung 31 ist hier als ein Block dargestellt, der mit Anschlußstellen 35 und 36 für die Leitungen des Stromzuführungskabels 27, 37 und 38 für die Anschlußleitungen 25 und 26 des Kaltleiters 24, sowie 38 und 39 für die Anschlußleitungen 28 und 29 des Kaltleiters 33 versehen ist. Aus der gemeinsamen Zuschaltung der Anschlußleitungen 25 und 28 an die Anschlußstelle 38 resultiert die Parallelschaltung der beiden Kaltleiter 24 und 33.

Der Block der Regelschaltung 31 enthält ferner die Anschlußstellen 40 und 41, an denen eine Kontrolleuchte L1, beispielsweise in Form einer Glimmlampe oder einer Leuchtdiode angeschlossen sein kann.

An den Anschlußstellen 42 und 43 des Blockes der Regelschaltung 31 kann ein mechanischer Schalter S1 angeschlossen sein; an der Anschlußstelle 44 kann eine Berührungselektrode 47 angeschlossen sein. Beide Möglichkeiten und auch die einzelnen in dem Block enthaltenen elektrischen und elektronischen Bauelemente der Regelschaltung 31 werden nachfolgend und im Zusammenhang mit den Figuren 3 bis 5 beschrieben.

In den Figuren 3, 4 und 5 sind gleiche Bauelemente mit gleichen Bezugzeichen versehen. Dies gilt auch für die bereits bei Figur 1 erläuterten Teile, wie Leitungen, Kaltleiter, Anschlußstellen usw.

Figur 3 zeigt eine Schaltungsanordnung für die Regelschaltung 31 eines Heizkörpers nach der Erfindung, mit je wenigstens einem Kaltleiter 24 und 33, die parallel geschaltet sind. Der der zusätzlichen Heizung dienende Kaltleiter 33 weist eine um wenigstens 80 °C höhere Curie-Temperatur als der der Dauerheizung dienende Kaltleiter 24 auf. Die Regelschaltung 31 enthält folgende Bauelemente:

a) ein Stellglied 45, insbesondere in Form eines Triac-Schalters, das mit dem Zusatzheiz-Kaltleiter 33 in Reihe geschaltet ist und über einen Strombegrenzungswiderstand R6 durch einen mechanischen Schalter 46 betätigbar ist;

b) zwei Widerstände R1, R2, eine Diode D1 und eine Zenerdiode D2, die als Reihenschaltung der Parallelschaltung der Kaltleiter 24, 33 parallel geschaltet ist;

c) einen Kondensator C1, der zusammen mit der Reihenschaltung gemäß Punkt b) zur Spannungsversorgung der Regelschaltung dient.

Die Glimmlampe L1 und der Widerstand R3 sind von der Regelung unabhängig. 5 und 6 stellen gemeinsam die Gerätebuchse dar.

Die Widerstände R1 und R2, die Diode D1 und der Kondensator C1 bilden die Spannungsversorgung für die Regelschaltung. R1 und R2 sind mit je 9,1 Ω zur Einhaltung der Leistungswerte und der Spannungsabstände in Reihenschaltung erforderlich. Die Zenerdiode D2 begrenzt die Spannung an Punkt I des Schalters S1 auf 4,7 Volt. In der 0-Stellung des Schalters S1 liegt am Gate G des Stellgliedes 45 die Spannung 0 Volt. Der Widerstand R6 hat 1 kΩ und dient der Strombegrenzung.

Wird der Schalter S1 während des Vorschubes der Kleberstäbchen betätigt, so liegt die Spannung von Punkt I über den Widerstand R6 am Gate G des Stellgliedes 45. R9 liegt an der vollen Spannung. Der Heizkörper 11 wird über 230 °C aufgeheizt. Beim Umschalten auf die 0-Stellung ist dieser Vorgang beendet.

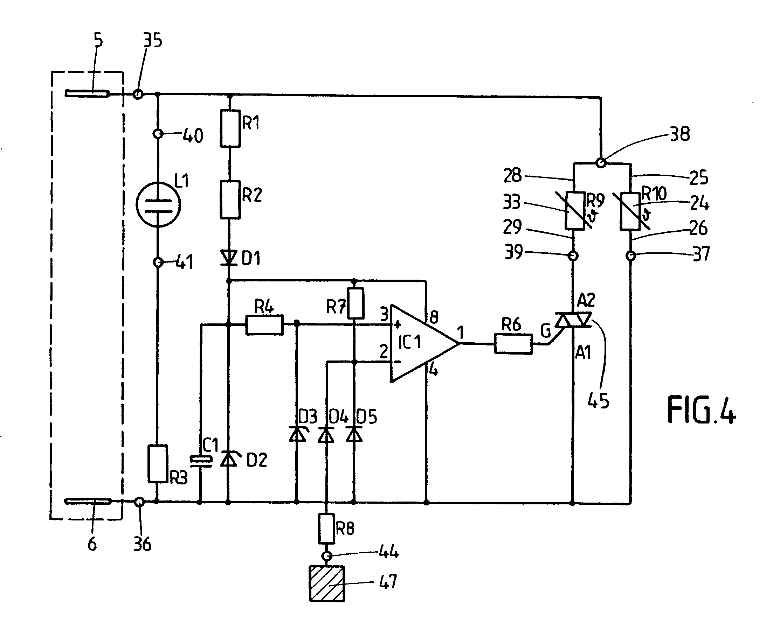

Figur 4 zeigt eine weitere Schaltungsanordnung für die Regelschaltung 31 eines Heizkörpers 11 mit je wenigstens einem Kaltleiter 24 und 33, die parallel geschaltet sind, wobei der der zusätzlichen Heizung dienende Kaltleiter 33 eine um wenigstens 80 °C höherer Curie-Temperatur als der der Dauerheizung dienende Kaltleiter 24 aufweist. Die Regelschaltung 31 enthält folgende Bauelemente:

a) ein Stellglied 45, insbesondere in Form eines Triac-Schalters, das mit dem Zusatzheiz-Kaltleiter 22 in Reihe geschaltet ist und über einen Strombegrenzungswiderstand R6 durch einen Operationsverstärker IC1 mit fünf Anschlußpunkten 1, 2, 3, 4, 8, an dessen einem Anschlußpunkt 2 eine Berührungselektrode 47 angeschlossen ist, einschaltbar ist, wofür zwischen der Berührungselektrode 47 und dem Anschlußpunkt 2 ein Strombegrenzungswiderstand R8 und eine Diode D4 geschaltet ist;

b) zwei Widerstände R1, R2, eine Diode D1 und einer Zenerdiode D2, die als Reihenschaltung der Parallelschaltung der Kaltleiter 24, 33 parallel geschaltet ist;

c) einen Kondensator C1, der zusammen mit der Reihenschaltung gemäß Punkt b) zur Spannungsversorgung der Regelschaltung dient und über einen Strombegrenzungswiderstand R4 mit dem Anschlußpunkt 3 des Operationsverstärkers IC1 verbunden ist;

d) die beiden Anschlußpunkte 4 und 8 des Operationsverstärkers IC1 liegen an der Versorgungsleitung, und zwar der Anschlußpunkt 4 unmittelbar und der Anschlußpunkt 8 über eine Zenerdiode D2;

e) über die Zenerdiode D3 ist der Punkt 3 des Operationsverstärkers mit der Stromversorgung verbunden.

Die Bauelemente L1, R3, R1, R2, D1 und C1 haben in dieser Schaltung die gleichen Aufgaben wie bei Fig. 3 beschrieben. Der Widerstand R4 und die Zenerdiode D3 (12 V) erzeugen am Punkt 3 des Operationsverstärkers IC1 eine Referenzspannung von etwa 8,2 Volt. Durch Berühren der Elektrode 47 wird eine Wechselspannung in die Schaltung eingekoppelt (sogenannte Brummspannung). Der Widerstand R8 (2,2 MΩ) und die die Dioden D4 und D5 bereiten diese Spannung so auf, daß die Spannung an Punkt 1 des Operationsverstärkers IC1 von 12 auf 8 Volt sinkt und damit über den Operationsverstärker IC1 das Stellglied 11 eingeschaltet wird. Es steht somit die volle Leistung des Kaltleiters 33 zur Verfügung.

Wird die Elektrode 47 losgelassen, so steigt die Spannung auf über 8 Volt an, so daß das Stellglied 45 abgeschaltet wird und der Kaltleiter 33 nicht mehr von Strom durchflossen wird.

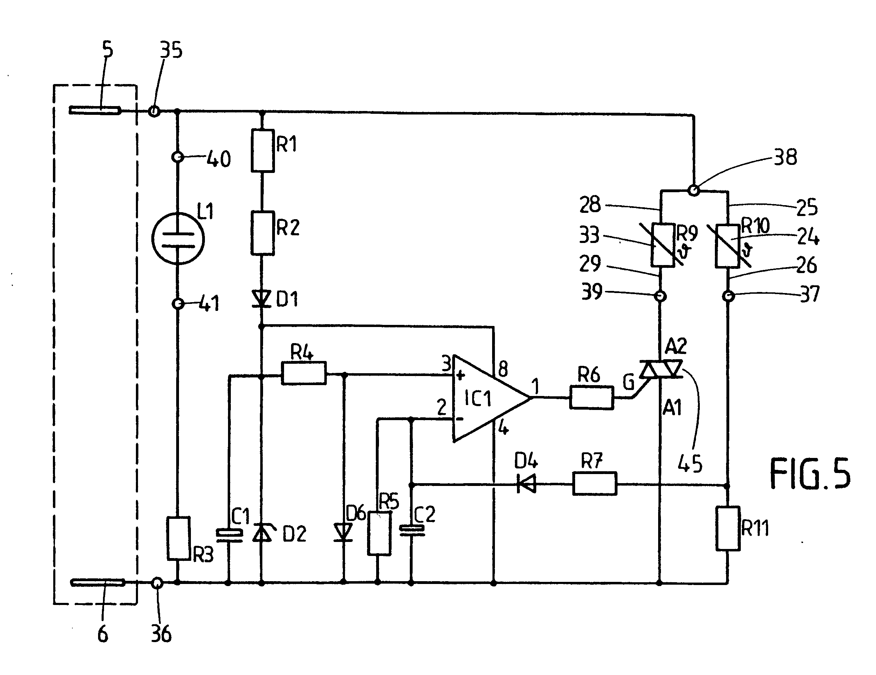

Figur 5 zeigt eine Schaltungsanordnung für die Regelschaltung eines Heizkörpers 11 mit je wenigstens einem Kaltleiter 24, die parallel geschaltet sind. Der der zusätzlichen Heizung dienende Kaltleiter 33 weist eine um wenigstens 80 °C höhere Curie-Temperatur als der der Dauerheizung dienende Kaltleiter 24 auf.

Die Regelschaltung 31 enthält folgende Bauelemente:

a) ein Stellglied 45, insbesondere in Form eines Triac-Schalters, das mit dem Zusatzheiz-Kaltleiter 33 in Reihe geschaltet ist und über einen Strombegrenzungswiderstand R6 durch einen Operationsverstärker IC1 mit fünf Anschlußpunkten 1, 2, 3, 4, 8, an dessen einem Anschlußpunkt 2 eine Reihenschaltung aus einem Widerstand R7 und einer Diode D5 und eine Parallelschaltung aus einem Kondensator C2 und einem Widerstand R5 angeschlossen sind;

b) zwei Widerstände R1 und R2, eine Diode D1 und eine Zenerdiode D2, die als Reihenschaltung der Parallelschaltung der Kaltleiter 24, 33 parallel geschaltet ist;

c) einen Kondensator C1, der zusammen mit der Reiehenschaltung gemäß Punkt b) zur Spannungsversorgung der Regelschaltung dient und über einen Strombegrenzungswiderstand R4 mit dem Anschlußpunkt 3 des Operationsverstärkers

IC1 verbunden ist;

d) zwei Anschlußpunkte 4 und 8 des Operationsverstärkers liegen an der Versorgungsspannung, und zwar der eine Anschlußpunkt 4 unmittelbar und der andere Anschlußpunkt 8 über eine Reihenschaltung aus einem Widerstand R7 und einer Diode D5;

e) der Anschlußpunkt des Operationsverstärkers liegt ferner über eine Diode an der Versorgungsleitung.

Auch hier sind die Kontrolleuchte L1 und der Widerstand R3 von der Regelung unabhängig.

Ebenso bilden, wie bereits beschrieben, R1, R2, D1 und C1 die Spannungsversorgung für die nachfolgende Schaltung.

Die Zenerdiode D2 begrenzt die Betriebsspannung auf 12 Volt.

Mit dem Widerstand R4 und der Diode D6 wird das Referenzsignal für die Regelschaltung erzeugt. Die Referenzspannung von 0,7 Volt wird durch die Diode temperaturstabilisiert. Der Widerstand R11 ist der Meßwiderstand im Stromkreis des Kaltleiters R10.

Mit den Widerständen R5 und R7, der Diode D4 und dem Kondensator C2 wird das Meßsignal aufbereitet und dem Operationsverstärker (Komparator) IC1 zugeführt.

Bei der Schaltungsanordnung gemäß Figur 5 erfolgt die Regelung über den als Fühler wirkenden Kaltleiter 24 oder über die Grundlastheizung.

Der Strom und der Spannungsabfall am Widerstand R11 ist ein direktes Maß für das Temperaturverhalten der Grundlastheizung. Über R7, D4 und C2 wird das Meßsignal gleichgerichtet, R5 ist eine definierte Belastung für das Signal am Anschlußpunkt 2 des Operationsverstärkers IC1.

Die Durchlaßspannung der Diode D6 ist die Vergleichsspannung für den Meßvorgang. Diese Diode gleicht thermische Schwankungen ebenso wie Spannungsschwankungen am Anschlußpunkt 3 des Operationsverstärkers IC1 in gewissen Bereichen aus und liefert somit ein relativ stabiles Referenzsignal von 0,7 V, welches keine Justierung erfordert.

Im Zustand des Einschaltens der Heizpatrone bzw. im Lastzustand ist das Meßsignal am Anschlußpunkt 2 des als Komparatorgeschalteten Verstärkers IC1 größer als das Referenzsignal am Anschlußpunkt 3.

Der Komparator kippt in den Einschaltzustand. Der zusätzliche Heizwiderstand R9 liegt an voller Spannung.

Bei Erreichen der Zieltemperatur wird das Meßsignal kleiner als das Referenzsignal, das Stellglied 45 wird abgeschaltet. Der Komparator kippt zwischen diesen beiden Zuständen hin und her, je nach Betriebsanforderung. Es handelt sich um einen Zweipunktregler.

Mit Hilfe der Regeltrechniktheorie kann jeder beliebige Reglertyp für diese Regelstrecke eingesetzt werden.

Es besteht grundsätzlich auch die Möglichkeit, die Temperatur des Heizkörpers mittels Handrad über ein Potentiometer zu regeln, um unterschiedliche Arten des Kunststoffmaterials des Klebers optimal zu verarbeiten.

Bezugszeichenliste und Ausführungsbeispiel

1 Anschlußpunkt am Operationsverstärker IC1

2 Anschlußpunkt (-) am Operationsverstärker IC1

3 Anschlußpunkt ( + ) am Operationsverstärker IC1

4 Anschlußpunkt am Operationsverstärker IC1 zu Versorgungsspannung

5 und 6 bilden gemeinsam die Gerätebuchse

8 Anschlußpunkt am Operationsverstärker IC1 zu Versorgungsspannung

9 Meßpunkt im Heizkörper 11

10 Kunststoffgehäuse, das aus zwei Hälften besteht

11 Heizkörper

12 zylindrischer Flansch

13 konischer Flansch

14 Führungskanal

15 Einstecktülle

16 Kleberstäbchen (Stick)

17 Ventileinsatz

18 Mundstück

19 Austrittsöffnung

20 Kugelventil

21 Ventilfeder

22 einseitig offene Ausnehmung (Längskanal)

23 Kaltleiter-Heizpatrone

24 Kaltleiter

25 Anschlußleitung zum Kaltleiter 24

26 Anschlußleitung zum Kaltleiter 24

27 Stromzuführungskabel

28 Anschlußleitung zum Kaltleiter 33

29 Anschlußleitung zum Kaltleiter 33

30 Schaltungsplatine

31 Regelschaltung

32 einseitig offene Ausnehmung (Längskanal)

33 Heizwiderstand (Kaltleiter)

34 Heizpatrone

35 Anschlußstelle an der Regelschaltung 31 für die Stromzuführung

36 Anschlußstelle an der Regelschaltung 31 für die Stromzuführung

37 Anschlußstelle an der Regelschaltung 31 für die Anschlußleitung 26

38 Anschlußstelle an der Regelschaltung 31 für die Anschlußleitungen 25 und 28

39 Anschlußstelle an der Regelschaltung 31 für die Anschlußleitung 29

40 Anschlußstelle an der Regelschaltung 31 für die Kontrolleuchte L1

41 Anschlußstelle an der Regelschaltung 31 für die Kontrolleuchte L1

42 Anschlußstelle an der Regelschaltung 31 für einen gegebenenfalls vorhandenen Schalter S1

43 Anschlußstelle an der Regelschaltung 31 für einen gegebenenfalls vorhandenen Schalter S1

44 Anschlußstelle an der Regelschaltung 31 für eine gegebenenfalls vorhandene Berührunselektrode 47

45 Stellglied (Triac) 1

46 Handauslöser für den Schalter S1

47 Berührungselektrode

Die Widerstände R1 und R2, je 9,1 kΩ, die Diode D (IN4007) und die Zenerdiode D2 mit 4,7, bzw. 12 Volt bilden die Spannungsversorgung.

Die Kontrolleuchte L1 mit dem Widerstand R3 von 180 kΩ sind von der Regelung unabhängig und sind im Bedarfsfall vorhanden.

Der Kondensator C1 hat die Kennwerte 16 V und 100 μF.

Der Schalter S1 ist als Tastschalter ausgebildet und ist nur solang eingeschaltet, wie er über den Handauslöser 46 betätigt wird.

Die Widerstände R4 und R5 haben je 100 kΩ.

Der Widerstand R6 hat 1 kΩ.

Das Stellglied 45 ist ein Triac TLC3B6T mit dem Gate G und den Anschlüssen A1 und A2.

Die Widerstände R7 und R8 sind Figur 4 und haben je 2,2 MΩ.

Die Zenerdiode D3 hat eine Durchlaßspannung von 8,2 V.

D4 und D5 sind Dioden des Typs 1N4148.

D6 in Fig. 5 ist eine Diode des Typs 1N4148.

Die Widerstände R9 und RIO sind Kaltleiter mit Curie-Temperaturen von 320 °C für R9 und 230 °C für RIO.

Der Widerstand R11 in Fig. 5 hat 7,5 Ω.

IC1 ist ein Operationsverstärker des Typs LM358.

Der Widerstand R7 in Fig. 5 hat 820 Ω.

Der Widerstand R 12 in Fig. 5 hat 820 Ω.

D4 in Fig. 5 ist eine Diode des Typs 1N4003.

Der Kondensator C2 in Fig. 5 hat die Kennwerte 100 μF und 16 V.

**Ansprüche**

1. Heizkörper für Elektrowärmegeräte, insbesondere für eine Heißkleber-Pistole, der wenigstens einen temperaturabhängigen Widerstand, insbesondere einen Kaltleiter (PTC-Widerstand), für die Dauerbeheizung und wenigstens einen weiteren Heizwiderstand enthält, die in dem Heizkörper, der aus gut wärmeleitendem Metall, insbesondere aus Aluminium, besteht, untergebracht sind und der mit Heizflächen für die Wärmeübergabe versehen ist, dadurch gekennzeichnet, daß der wenigstens eine weitere Heizwiderstand (33) eine höhere Arbeitstemperatur aufweist als der wenigstens eine temperaturabhängige Widerstand, insbesondere der Kaltleiter (24), daß der wenigstens eine temperaturabhängige Widerstand, insbesondere der Kaltleiter (24), neben seiner Funktion der Dauerbeheizung des Heizkörpers (11) auch als Fühler seiner eigenen Temperatur dient, dessen Signale zur Steuerung einer Regelschaltung (31) verwendet werden, daß der wenigstens eine weitere Heizwiderstand (33) zur Beheizung des Heizkörpers (11) nur während der Aufheizperiode oder im Falle eines erhöhten Wärmebedarfs während der Betätigung der Heißkleber-Pistole dient, indem dieser weitere Widerstand (33) über ein Stellglied der Regelschaltung (31) zu- oder abgeschaltet wird.

2. Heizkörper nach Anspruch 1, dadurch gekennzeichnet, daß der wenigstens eine temperaturabhängige Widerstand ein Widerstandsdraht mit positivem Temperaturkoeffizienten des Widerstandswertes ist, der in einer Heizpatrone untergebracht ist.

3. Heizkörper nach Anspruch 1, dadurch gekennzeichnet, daß der wenigstens eine Kaltleiter (24) eine Curie-Temperatur von 230 °C besitzt und der wenigstens eine weitere Heizwiderstand (33) ein Festwiderstand ist, dessen Arbeitstemperatur etwa 350 °C beträgt.

4. Heizkörper nach Anspruch 1, dadurch gekennzeichnet, daß sowohl der wenigstens eine Kaltleiter (24), als auch der eine weitere Heizwiderstand (33) Kaltleiter sind, deren Curie-Temperaturen voneinander wenigstens um 80 °C abweichen.

5. Heizkörper nach Anspruch 4, dadurch gekennzeichnet, daß der wenigstens eine Kaltleiter (24) eine Curie-Temperatur von 230 °C besitzt und der wenigstens eine weitere Heizwiderstand (33) eine Curie-Temperatur von etwa 320 °C aufweist.

6. Heizkörper nach einem der Ansprüche 1 bis 5, der als Heizfläche für die Wärmeübergabe einen beiderseits offenen, in Längsrichtung des Heizkörpers (11) durchgehenden, anfangs gegebenenfalls zylindrischen und zum anderen Ende konisch sich verjüngenden Führungskanal (14) aufweist, zu dessen einer Seite und parallel zum ihm sich der wenigstens eine Kaltleiter (24) befindet und in einer Ausnehmung (22) des Heizkörpers (11) untergebracht ist, wobei der Heizkörper (11) im Vertikalschnitt eine Breite aufweist, die nur geringfügig größer ist als der Durchmesser des zylindrischen Teiles des Führungskanals (14) bzw. der Ausnehmung (22),
dadurch gekennzeichnet,
daß der wenigstens eine weitere Heizwiderstand (33) ebenfalls in einer Ausnehmung (34) untergebracht ist, die sich spiegelbildlich zur ersten Ausnehmung (22) auf der anderen Seite des Führungskanals (14) befindet.

7. Schaltungsanordnung für die Regelschaltung (31) eines Heizkörpers (11) nach Anspruch 1 mit je wenigstens einem Kaltleiter (24 und 33), die parallel geschaltet sind,
dadurch gekennzeichnet,
- daß der der zusätzlichen Heizung dienende Kaltleiter (33) eine um wenigstens 80 $^\circ$C höhere Curie-Temperatur als der Dauerheizung dienende Kaltleiter (24) aufweist
- daß die Regelschaltung (31) folgende Bauelemente enthält:
a) ein Stellglied (45), insbesondere in Form eines Triac-Schalters, das mit dem Zusatzheiz-Kaltleiter (33) in Reihe geschaltet ist und über einen Strombegrenzungswiderstand (R6) durch einen mechanischen Schalter (46) betätigbar ist.
b) Zwei Widerstände (R1, R2), eine Diode (D1) und eine Zenerdiode (D2), die als Reihenschaltung der Parallelschaltung der Kaltleiter (24, 33) parallel geschaltet ist,
c) einen Kondensator (C1), der zusammen mit der Reihenschaltung gemäß Punkt b) zur Spannungsversorgung der Regelschaltung dient.

8. Schaltungsanordnung für die Regelschaltung (31) eines Heizkörpers (11) nach Anspruch 1 mit je wenigstens einem Kaltleiter (24 und 33), die parallel geschaltet sind,
dadurch gekennzeichnet,
- daß der der zusätzlichen Heizung dienende Kaltleiter (33) eine um wenigstens 80 $^\circ$C höhere Curie-Temperatur als der Dauerheizung dienende Kaltleiter (24) aufweist,
- daß die Regelschaltung (31) folgende Bauelemente enthält:
a) ein Stellglied (45), insbesondere in Form eines Triac-Schalters, das mit dem Zusatzheiz-Kaltleiter (33) in Reihe geschaltet ist und über einen Strombegrenzungswiderstand (R6) durch einen Operationsverstärker (IC1) mit fünf Anschlußpunkten (1, 2, 3, 4, 8), an dessen einem Anschlußpunkt (2) eine Berührungselektrode (47) angeschlossen ist, einschaltbar ist, wofür zwischen der Berührungselektrode (47) und den Anschlußpunkt (2) ein Strombegrenzungswiderstand (R8) und eine Diode (D4) geschaltet ist,
b) zwei Widerstände (R1, R2), eine Diode (D1) und eine Zenerdiode (D2), die als Reihenschaltung der Parallelschaltung der Kaltleiter (24, 33) parallel geschaltet ist,
c) einen Kondensator (C1), der zusammen mit der Reihenschaltung gemäß Punkt b) zur Spannungsversorgung der Regelschaltung dient und über einen Strombegrenzungswiderstand (R4) mit dem Anschlußpunkt (3) des Operationsverstärkers (IC1) verbunden ist,
d) zwei Anschlußpunkte (4 und 8) des Operationsverstärkers (IC1) liegen an der Versorgungsspannung, und zwar der Anschlußpunkt (4) unmittelbar und der Anschluopunkt (8) über eine Zenerdiode (D2),
e) der Anschlußpunkt (3) des Operationsverstärkers (IC) liegt ferner über eine Zenerdiode (D3) an der Versorgungsleitung.

9. Schaltungsanordnung für die Regelschaltung (31) eines Heizkörpers (11) nach Anspruch 1 mit je wenigstens einem Kaltleiter (24 und 33), die parallel geschaltet sind,
dadurch gekennzeichnet,
- daß der der zusätzlichen Heizung dienende Kaltleiter (33) eine um wenigstens 80 $^\circ$C höhere Curie-Temperatur als der der Dauerheizung dienende Kaltleiter (24) aufweist,
- daß die Regelschaltung (31) folgende Bauelemente enthält:
a) ein Stellglied (45), insbesondere in Form eines Triac-Schalters, das mit dem Zusatzheiz-Kaltleiter (33) in Reihe geschaltet ist und über einen Strombegrenzungswiderstand (R6) durch einen Operationsverstärker (IC1) mit fünf Anschlußpunkten (1, 2, 3, 4, 8), an dessen einem Anschlußpunkt (2) eine Reihenschaltung aus einem Widerstand (R7) und einer Diode (D5) und eine Parallelschaltung aus einem Kondensator (C2) und einem Widerstand (R5) angeschlossen sind,
b) zwei Widerstände (R1, R2), eine Diode (D1) und eine Zenerdiode (D2), die als Reihenschaltung der Parallelschaltung der Kaltleiter (24, 33) parallel geschaltet ist,
c) einen Kondensator (C1), der zusammen mit der Reihenschaltung gemäß Punkt b) zur Spannungsversorgung der Regelschaltung dient und über einen Strombegrenzungswiderstand (R4) mit dem Anschluopunkt (3) des Operationsverstärkers (IC1) verbunden ist,
d) zwei Anschlußpunkte (4 und 8) des Operationsverstärkers (IC1) liegen an der Versorgungsspannung, und zwar der Anschlußpunkt (4) unmittelbar und der Anschlußpunkt (8) über einer Reihenschaltung aus einem Widerstand (R7) und einer Diode (D5),
e) der Anschlußpunkt (3) des Operationsverstärkers (IC1) liegt ferner über eine Diode (D6) an der Versorgungsleitung.

10. Schaltungsanordnung nach einem der Ansprüche 7, 8 oder 9, dadurch gekennzeichnet, daß eine Kontrolleuchte (L1) in Form einer Glimmlampe oder einer Leuchtdiode vorhanden ist, die mit einem Widerstand (R3) parallel geschaltet ist.

9

FIG.1

FIG.2

FIG.3

EP 0 385 235 A1

FIG.4

EP 0 385 235 A1

FIG.5

EP 0 385 235 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-3316863 (METABOWERKE GMBH)<br>* Seite 8, Zeile 14 - Seite 9, Zeile 22; Figuren 1-3 *<br>--- | 1, 2 | G05D23/24<br>B05C17/005 |
| A | DE-A-3100834 (LANG APPARATEBAU GMBH)<br>* Zusammenfassung; Figur 1 *<br>--- | 1 | |
| A | EP-A-0055350 (HEINRICH STEINEL KG)<br>* Zusammenfassung; Figuren 1-7 *<br>--- | 1 | |
| A | EP-A-0087619 (SIEMENS AKTIENGESELLSCHAFT Berlin und München)<br>* Seite 6, Zeile 30 - Seite 7, Zeile 16; Figuren 1-7 *<br>--- | 3-5 | |
| A | US-A-4059204 (R. DUNCAN ET AL.)<br>* Spalte 3, Zeile 35 - Spalte 4, Zeile 43; Figuren 1, 3 *<br>--- | 7-10 | |
| A | US-A-4507546 (W. FORTUNE ET AL.)<br>* Zusammenfassung; Figur 8 *<br>--- | 7-9 | RECHERCHIERTE SACHGEBIETE (Int. Cl.5) |
| A | US-A-4506146 (R. RICE ET AL.)<br>* Spalte 2, Zeilen 6 - 68; Figur 1 *<br>----- | 7-9 | G05D<br>B05C<br>H05B |

Der vorliegende Recherchenbericht wurde für alle Patentansprüche erstellt

| Recherchenort | Abschlußdatum der Recherche | Prüfer |
|---|---|---|
| DEN HAAG | 22 JUNI 1990 | HELOT H.V. |